# EUROPÄISCHE PATENTSCHRIFT

(11) **EP 1 231 115 B1**
(45) Veröffentlichungstag und Bekanntmachung des Hinweises auf die Patenterteilung: **28.04.2004**
(21) Anmeldenummer: 02001175.5
(22) Anmeldetag: 28.01.2002
(51) Int. Cl.: B60R 21/16, B60R 21/20

(54) **Gassack-Modul**
Airbag module
Module d'airbag

(30) Priorität: 07.02.2001 DE 20102107 U
(43) Veröffentlichungstag der Anmeldung: 14.08.2002
(73) Patentinhaber: TRW Automotive Safety Systems GmbH, 63743 Aschaffenburg (DE)
(72) Erfinder: Bohn, Stefan, 63773 Goldbach (DE); Fellhauer, Joachim, 63741 Nilkheim (DE)
(74) Vertreter: Kitzhofer, Thomas, Dipl.-Ing.

(56) Entgegenhaltungen:
- EP-A- 1 172 263
- WO-A-97/34783
- DE-A- 19 904 072
- DE-C- 19 932 696

## Beschreibung

Die Erfindung betrifft ein Gassack-Modul, mit einem Gassack mit einer Gassackwand, die einen vorderen und einen rückseitigen Wandungsabschnitt aufweist, wobei vom vorderen Wandungsabschnitt im aufgeblasenen Zustand eine Einbuchtung in Richtung rückseitigem Wandungsabschnitt verläuft, die dadurch gebildet wird, daß ein Teil der Gassackwand an einer ungehinderten Bewegung nach außerhalb des Moduls beim Entfalten gehindert wird.

DE 19 904 072 A1 offenbart ein Airbag mit einem Einbuchtung in der Mitte und der Merkmale der Oberbegriffs der Anspruchs 1.

Derartige Gassäcke sind angedacht, um im Lenkrad oder der Amaturentafel eingebaut zu werden und bei einem Frontalaufprall den Insassen zu schützen. Der Gassack hat eine ringförmige aufzublasende Kammer, wobei die innere, die Einbuchtung begrenzende Wand durch die Einbuchtung gebildet ist. Die Einbuchtung erstreckt sich von der Vorderwand zentral nach hinten, und der tiefste Punkt der Einbuchtung wird durch ein Gewebeteil gebildet, das am Gassack-Modul bleibend befestigt ist und somit beim Entfalten nicht frei in Richtung Insassen bewegt wird, um diesen an einer Rückhaltung zu hindern. Der Gassack tritt üblicherweise aufgrund der Ringform der Kammer schräg nach außen aus dem Modul aus, erst anschließend bewegt sich der vordere Wandungsabschnitt in Richtung zum Insassen.

Bei einem mittig sitzenden Insassen soll bei hoher Aufprallintensität ausgeschlossen werden, daß der Kopf des Insassen in die Einbuchtung eintauchen kann. Dies wird durch unterschiedlich aufwendige konstruktive Lösungen erreicht. Die Erfindung schafft eine einfache, kostengünstige Lösung hierfür.

Dies wird bei einem Gassack-Modul der eingangs genannten Art dadurch erreicht, daß der Gassack im Bereich der Mündung der Einbuchtung einen blasenartigen, mit der Kammer des Gassacks in Strömungsverbindung stehenden Fortsatz hat, der die Einbuchtung schließt, und daß die Einbuchtung schräg von ihrer tiefsten Stelle zum vorderen Wandungsabschnitt verläuft. Der erfindungsgemäße Gassack hat eine wenigstens abschnittsweise schräg verlaufende Einbuchtung, die vorzugsweise an ihrer Mündung bereits geschlossen ist und so das geringste Eintauchen des Kopfes des Insassen in die Einbuchtung verhindert. Der schräg verlaufende Wandungsabschnitt erlaubt zumindest beim Eintauchen eines schweren Insassen in den Gassack ein Abstützen des Fortsatzes an der die Einbuchtung definierenden Gassackwand. Gegebenenfalls ist bereits ein solches Abstützen im vollständig aufgeblasenen Zustand des Gassacks, ohne Einwirkung des Insassen, vorgesehen. Der aufblasbare Fortsatz kann dem Gassack eine asymmetrische Gestalt geben und von einer Seite seitlich die Mündung zusammendrücken und sie schließen.

Vorzugsweise schiebt sich der Fortsatz beim Aufblasen von einer Seite radial gegen die Mündung, um sie zu schließen und der Einbuchtung einen schrägen Verlauf zu geben. Der schräge Verlauf muß aber nicht durch den Fortsatz verursacht werden. Der schräge Verlauf kann dadurch gebildet sein, daß entweder die Einbuchtung insgesamt schräg verläuft oder daß die die Einbuchtung bildende Wandung teilweise schräg, d.h. nicht zylindrisch verläuft.

Vorzugsweise steht der Fortsatz in aufgeblasenem Zustand gegenüber dem vorderen Wandungsabschnitt nach außen vor, was der Stabilität des Gassacks dienlich ist und auch dem Fortsatz, der wie ein Verschluß wirkt, eine größere Stabilität verleiht.

Der gesamte Gassack, mit Fortsatz, kann aus einem Gewebeteil bestehen, das wie ein Strumpf gewoben wird. Alternativ kann er auch aus einigen Gewebeteilen zusammengesetzt sein.

Die bevorzugte Ausführungsform des Gassacks sieht vor, daß, bezogen auf den ausgebreiteten, nicht aufgeblasenen Zustand des Gassacks, dieser aus wenigstens vier übereinander liegenden, miteinander verbundenen Gewebeabschnitten besteht. Vorgesehen sind ein oberes und ein unteres Gewebeteil zur Bildung der vorderen bzw. rückseitigen Wandungsabschnitte. Darüber hinaus hat der Gassack zwei innere Gewebeteile, die die Einbuchtung begrenzen. Diese inneren Gewebeteile können eine unsymmetrische, ringförmige Gestalt und eine Ausbuchtung zur Bildung des Fortsatzes haben. Die inneren Gewebeteile sind üblicherweise an ihren Außenrändern miteinander vernäht.

Bei einer Ausführungsform kann ferner vorgesehen sein, daß alle Gewebeteile eine zentrale Öffnung haben, wobei die Öffnungen konzentrisch zueinander angeordnet sein können, erneut bezogen auf den ausgebreiteten, nicht aufgeblasenen Zustand des Gassacks.

Die inneren Gewebeteile können die gleiche Außengeometrie haben, was das Vernähen der beiden Gewebeteile am Außenrand erleichtert.

Die Ausbuchtungen der inneren Gewebeteile haben vorzugsweise eine Form, die ähnlich einer Pilzkappe ist. An der Unterseite der Kappe schließt sich dann ein Ringsegment an.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 eine Seitenansicht des erfindungsgemäßen Gassack-Moduls mit aufgeblasenem Gassack,
Figur 2 eine Draufsicht auf den in Figur 1 dargestellten Gassack in ausgebreitetem, nicht aufgelasenem Zustand,
Figur 3 eine Schnittansicht durch den aufgeblasenen Gassack längs der Linie III-III in Figur 2,
Figur 4 eine Schnittansicht durch ein erfindungsgemäßes Gassack-Modul gemäß einer zweiten Ausführungsform in ausgebreitetem Zustand bei etwas auseinandergezogenen Gewebelagen,
Figur 5 eine Draufsicht auf den aufgeblasenen Gassack nach Figur 4 und
Figur 6 eine Draufsicht auf den gegenüber Figur 4 geringfügig modifizierten Gassack.

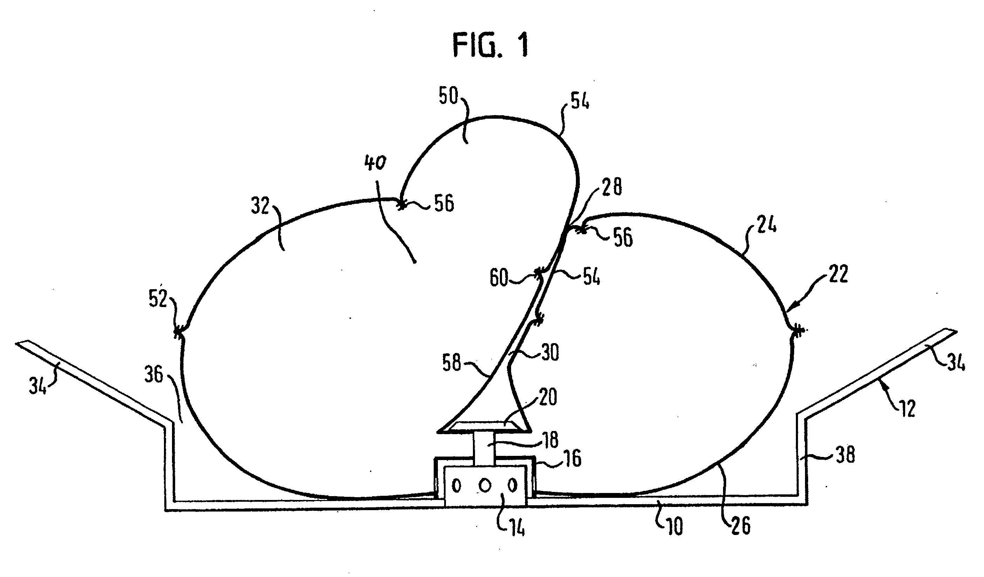

In Figur 1 ist ein Gassack-Modul dargestellt, das im Lenkrad eines Fahrzeugs untergebracht ist. Das Gassack-Modul hat ein Aufnahmegehäuse 10, das vorderseitig mit einer Abdeckung 12 geschlossen ist. Im Modul ist ein Gasgenerator 14 untergebracht, der von einem käfigförmigen Diffusor 16 umgeben ist. Von der Stirnseite des Diffusors 16 steht ein Halteteil in Form eines Rohres 18 ab, welches ein Mittelstück 20 der einstückigen Abdeckung 12 an einem Nachaußenschwenken beim Öffnen der Abdeckung 12 hindert, so daß das Mittelstück 20 stehen bleibt. Ein Gassack 22 im Modul hat eine Gassackwand, die aus mehreren Abschnitten besteht, nämlich einem vorderen Wandungsabschnitt 24, der dem Insassen im aufgeblasenen Zustand zugewandt ist, und einem rückseitigen Wandungsabschnitt 26. Der vordere Wandungsabschnitt 24 hat eine zentrische Öffnung, die eine Mündung 28 einer Einbuchtung 30 bildet. Die Einbuchtung 30 entsteht dadurch, daß durch das Halteteil 18 und das Mittelstück 20 ein Teil der Gassackwand, nämlich das eigentliche Zentrum des vorderen Wandungsabschnitts 24 an einer Bewegung in Richtung zum Insassen gehindert wird. Dieses Zentrum ist der Teil der Gassackwand, der in Figur 1 unter dem Mittelstück 20 liegt und der die tiefste Stelle der Einbuchtung bildet. Durch die Einbuchtung 30, die nicht mit Gas befüllt wird, entsteht eine ringförmige, mit Gas zu befüllende Kammer 32 des Gassacks 22. Alternativ könnte die Kammer 32 auch in mehrere Kammern unterteilt sein.

Mit 34 sind die Abschnitte der Abdeckung 12 bezeichnet, die sich vom Mittelstück 20 beim Entfalten des Gassacks lösen und nach außen schwenken zur Freigabe einer ringförmigen Austrittsöffnung 36.

Im gefalteten Zustand ist der Gassack im Modul in einem Ringraum untergebracht, der radial durch den Diffusor 16, das Halteteil 18 und außenseitig durch die Umfangswand 38 des Modulgehäuses 10 begrenzt ist.

Damit die Mündung 28 der Einbuchtung 30 möglichst nahe am vorderen Wandungsteil 24 geschlossen ist, hat der Gassack im Bereich der Mündung 28 einen blasenartigen, mit der Kammer 32 über eine Überströmöffnung 40 in Strömungsverbindung stehenden, aufblasbaren Fortsatz 50, der die Einbuchtung im aufgeblasenen Zustand bereits an der Mündung 28 schließt. Die Überströmöffnung 40 erstreckt sich über die gesamte Tiefe der Einbuchtung 30, was jedoch nicht zwingend erforderlich ist. Der Fortsatz drückt die gesamte Einbuchtung 30 schräg nach außen, bezogen auf Figur 1 nach rechts, so daß sich die Einbuchtung 30 von ihrer tiefsten Stelle unterhalb des Mittelstücks 20 schräg zum vorderen Wandungsabschnitt 24 erstreckt.

Der aufblasbare Fortsatz 50 gibt dem gesamten Gassack eine stark unsymmetrische Gestalt, und er schiebt beim Aufblasen von einer Seite radial gegen die Mündung 28. Im aufgeblasenen Zustand steht der Fortsatz 50 darüber hinaus gegenüber dem vorderen Wandungsabschnitt 40 nach außen vor. Innerhalb der Einbuchtung 30 liegt der Fortsatz wenigstens teilweise an der Gassackwand an, um sich an ihr abzustützen.

Der Gassack 22 besteht aus vier Gewebelagen, die im aufgeblasenen, ausgebreiteten Zustand aufeinander liegen und miteinander verbunden sind. Die obere Gewebelage bildet den vorderen Wandungsabschnitt 24, die untere Gewebelage den rückseitigen Wandungsabschnitt 26, wobei beide längs ihres Außenumfanges an der Naht 52 miteinander verbunden sind. Die obere Gewebelage ist am Rand ihrer zentrischen Öffnung mit dem Rand der Öffnung eines ersten inneren Gewebeteiles 54 in Form eines Ringes längs der Naht 56 verbunden. Der Außenrand des Gewebeteils 54 ist wiederum mit einem zweiten inneren Gewebeteil 58 längs der geschlossenen Umfangsnaht 60 vernäht, das den unteren Teil der Einbuchtung 30 bildet. Die Gewebeteile 54 und 58 bilden innere Gewebeteile und definieren zusammen die Einbuchtung und den Fortsatz 50.

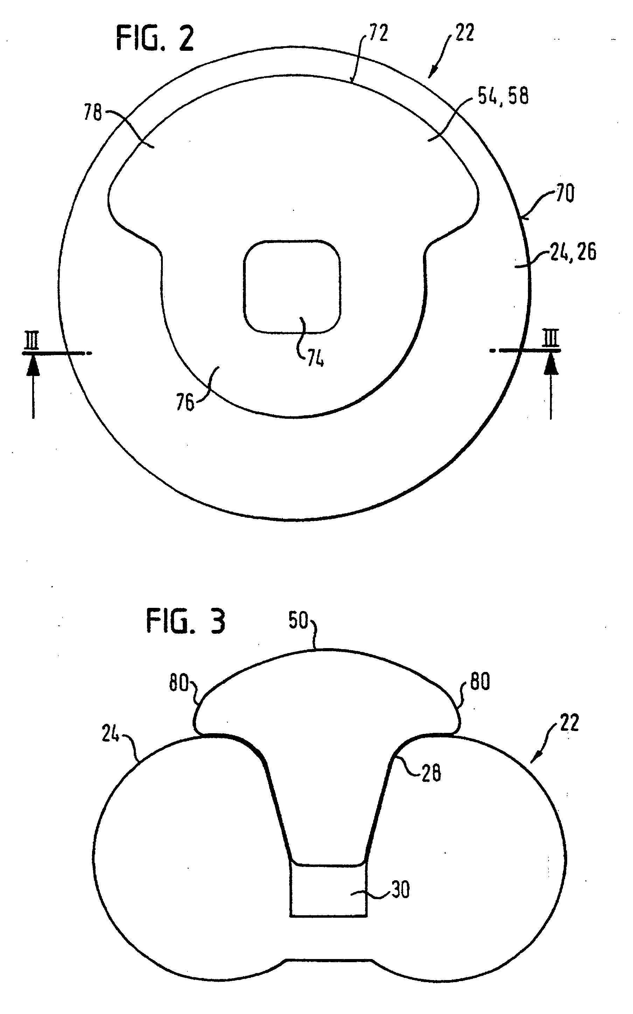

In Figur 2 sind der Zuschnitt der Gewebeteile und ihre Lage nach dem Miteinandervernähen zu erkennen, wobei alle Außenränder aller Gewebeteile zur Veranschaulichung in die Zeichenebene projiziert wurden. Der äußere Umfangsrand 70 ist der gemeinsame Umfangsrand des oberen und unteren Gewebeteils, d.h. des vorderen und rückseitigen Wandungsabschnitts 24, 26. Die inneren Gewebeteile 54, 58 haben exakt die gleiche Außengeometrie mit einem Außenrand 72. Sämtliche Gewebeteile 24, 26, 54, 58 besitzen eine zentrische Öffnung 74, wobei die einzelnen Öffnungen unterschiedlich groß sein können. Sie sind konzentrisch zueinander angeordnet und liegen im entfalteten, ausgebreiteten Zustand übereinander, wie Figur 2 zeigt.

Das Gewebeteil 58 kann auch mehrere Öffnungen, die nicht zentrisch zu den Öffnungen der übrigen Gewebeteile liegen, haben. Ist beispielsweise auf der Außenseite des Mittelstücks ein Emblem befestigt, können Schraubbolzen vom Einblem rückseitig durch das Mittelstück und das Gewebeteil 58 ragen, so daß die Befestigung des Emblems auch der Befestigung des Gewebeteils 58 dient. Wenn die Öffnungen 74 der Gewebeteile 24, 26, 54, 56 nicht übereinander liegen, müssen die Gewebeteile zum Falten verschoben werden, bis sie übereinander liegen.

Um den Fortsatz 50 zu bilden, weisen die inneren Gewebeteile 54, 58 einen Kreisringabschnitt 76 auf, der an einem seitlichen Ende der Öffnung 74 in eine Ausbuchtung 78 übergeht, die die Form einer Pilzkappe hat, und die in aufgeblasenem Zustand den Fortsatz 50 definiert. Die Kreisringabschnitte 76 begrenzen beim Aufblasen die Bewegung des Wandungsabschnitts 24 in Richtung zum Insassen.

In Figur 3 ist zu erkennen, daß sich der Fortsatz 50 im aufgeblasenen Zustand seitlich an den Abschnitten 80 sogar am vorderen Wandungsabschnitt 24 abstützt und auf ihm zu liegen kommt, da er den Wandungsabschnitt 24 überlappt, um sicher die Einbuchtung 30 im Bereich der Mündung 28 zu schließen.

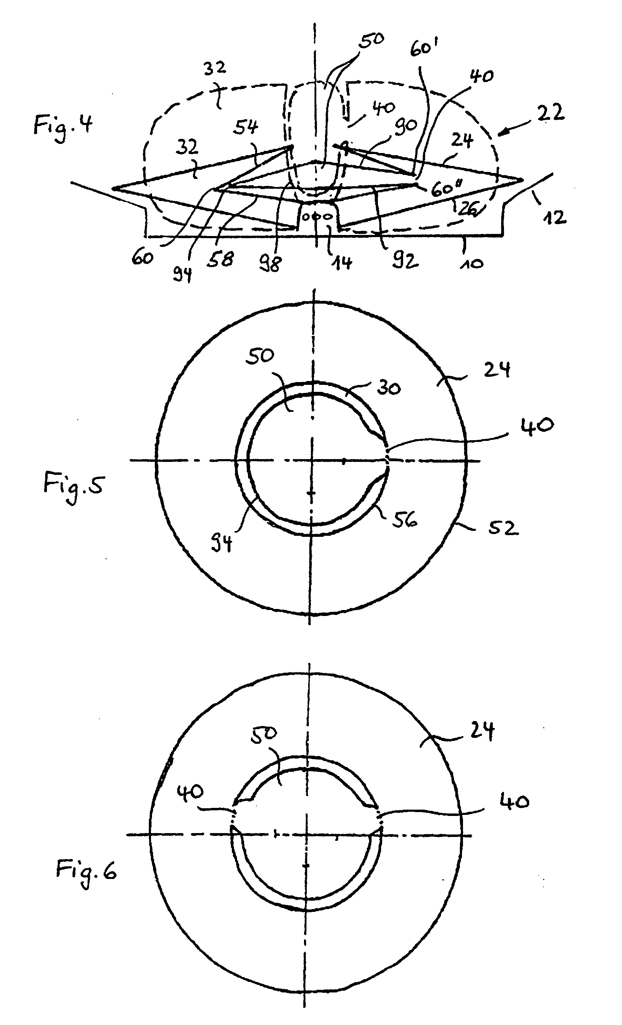

Die Ausführungsformen nach den Figuren 4 bis 6 entsprechen teilweise der zuvor beschriebenen, so daß einander entsprechende, funktionsgleiche Teile und Abschnitte mit den bereits eingeführten Bezugszeichen versehen sind und im folgenden nur noch auf die Unterschiede eingegangen wird.

Der Gassack 22 nach Figur 4 hat innere Gewebeteile 54, 58, die kreisringförmig sind und die nicht den Fortsatz 50 bilden. Der Fortsatz 50 wird vielmehr durch zwei eigene, separate, vorzugsweise kreisflächige übereinanderliegende Gewebelagen 90, 92 gebildet. Die Gewebelagen 90, 92 sind am Außenrand 94 bis auf eine oder mehrere Stellen miteinander verbunden. Dort, wo die Gewebelagen nicht miteinander verbunden sind, wird eine oder werden mehrere Überströmöffnungen 40 gebildet, so daß eine Strömungsverbindung zur Kammer 32 vorhanden ist. Die Naht 60 ist hierzu im Bereich der Überströmöffnung 40 weggelassen. Über Nähte oder Nahtabschnitte 60' und 60" sind im Bereich der Überströmöffnung die Gewebelagen 90 und 54 bzw. 92 und 58 miteinander verbunden. Die Überströmöffnung 40 ist somit, bezogen auf den mit unterbrochenen Linien gezeigten vollständig aufgeblasenen Zustand, in etwa auf halber Tiefe der Einbuchtung 30 gelegen. Wie auch in Figur 5 gezeigt, hat die Überströmöffnung 40 eine sehr geringe Querschnittsfläche, so daß in vollständig aufgeblasenem Zustand im Fortsatz 50 ein geringerer Druck als in der Kammer 32 herrschen kann (je nach Abstimmung). Der Fortsatz 50 hat bei der Ausführungsform nach Figur 4 die Gestalt eines separaten, kleinen, die Einbuchtung 30 ausfüllenden Gassacks, der an schräg nach außen verlaufenden Abschnitten 98 der dadurch nicht zylindrisch, sondern schräg verlaufenden Einbuchtung 30 (genauer der die Einbuchtung 30 definierenden Gassackwand) zumindest bei Eintauchen eines Insassen wenigstens abschnittsweise anliegen und sich an der Kammer 32 vorzugsweise radial und/oder axial abstützen kann.

Figur 6 zeigt, daß zwei Überströmöffnungen 40 vorgesehen sind.

Bei allen Ausführungsformen sollte sich der komplette Gassack im gefalteten Zustand um das Mittelstück 20 herum erstrecken, ohne auf dem Mittelstück 20 von oben aufzuliegen.

## Patentansprüche

1. Gassack-Modul, mit
einem Gassack (22) mit einer Gassackwand, die einen vorderen und einen rückseitigen Wandungsabschnitt (24, 26) aufweist,
wobei vom vorderen Wandungsabschnitt (24) im aufgeblasenen Zustand eine Einbuchtung (30) in Richtung zum rückseitigen Wandungsabschnitt (26) verläuft, die dadurch gebildet ist, daß ein Teil der Gassackwand an einer ungehinderten Bewegung nach außerhalb des Moduls beim Entfalten des Gassacks gehindert wird,
**dadurch gekennzeichnet,**
**daß** der Gassack (22) im Bereich der Mündung (28) der Einbuchtung (30) einen blasenartigen, mit der Kammer (32) des Gassacks (22) in Stömungsverbindung stehenden aufblasbaren Fortsatz (50) hat, der die Einbuchtung (30) schließt, und
**daß** die Einbuchtung (30) schräg von ihrer tiefsten Stelle zum vorderen Wandungsabschnitt (24) verläuft

2. Gassack-Modul nach Anspruch 1, **dadurch gekennzeichnet, daß** nur ein aufblasbarer Fortsatz (50) vorgesehen ist, der so ausgebildet ist, daß er sich beim Aufblasen von einer Seite radial einwärts in die Mündung (28) ausbreitet.

3. Gassack-Modul nach Anspruch 1 oder 2, **dadurch gekennzeichnet, daß** sich der Fortsatz (50) im aufgeblasenen Zustand des Gassacks (22) an Abschnitten der die Einbuchtung (30) definierenden Gassackwand anlegt.

4. Gassack-Modul nach einem der vorhergehenden Ansprüche, **dadurch gekennzeichnet, daß** der Fortsatz (50) im aufgeblasenen Zustand gegenüber dem vorderen Wandungsabschnitt (24) nach außen vorsteht.

5. Gassack-Modul nach einem der vorhergehenden Ansprüche, **dadurch gekennzeichnet, daß**, im Querschnitt des aufgeblasenen Gassacks gesehen, der Fortsatz (50) wenigstens eine Überströmöffnung zur Kammer (32) des Gassacks (22) hat, die sich nahezu über die gesamte Tiefe der Einbuchtung (30) erstreckt.

6. Gassack-Modul nach einem der Ansprüche 1 bis 4, **dadurch gekennzeichnet, daß**, im Querschnitt des aufgeblasenen Gassacks gesehen, der Fortsatz wenigstens eine Überströmöffnung zur Kammer (32) des Gassacks (22) hat, die von der Mündung (28) der Einbuchtung (30) entfernt, vorzugsweise in etwa mittig zwischen vorderem und hinterem Wandungsabschnitt (24, 26), und in der Einbuchtung (30) liegt.

7. Gassack-Modul nach einem der vorhergehenden Ansprüche, **dadurch gekennzeichnet, daß** der Gassack (22), bezogen auf den ausgebreiteten, nicht aufgeblasenen Zustand, aus wenigstens vier übereinander liegenden, miteinander verbundenen Gewebeteilen besteht, mit einem oberen und einem unteren Gewebeteil zur Bildung des vorderen bzw. rückseitigen Wandungsabschnitts (24, 26) und zwei inneren Gewebeteilen (34, 38), die die Einbuchtung (30) begrenzen.

8. Gassack-Modul nach Anspruch 7, **dadurch gekennzeichnet, daß** wenigstens zahlreiche der Gewebeteile (24, 26, 54, 58) eine zentrische Öffnung (74) haben, wobei die Öffnungen konzentrisch zueinander angeordnet sind, bezogen auf den ausgebreiteten, nicht aufgeblasenen Zustand des Gassacks.

9. Gassack-Modul nach Anspruch 7 oder 8, **dadurch gekennzeichnet, daß** die inneren Gewebeteile (54, 58) die gleiche Außengeometrie haben.

10. Gassack-Modul nach einem der Ansprüche 7 bis 9, **dadurch gekennzeichnet, daß** die inneren Gewebeteile (24, 28) eine unsymmetrische, ringförmige Gestalt mit einer Ausbuchtung zur Bildung des Fortsatzes (50) haben.

11. Gassack-Modul nach einem der Ansprüche 1 bis 9, **dadurch gekennzeichnet, daß** der aufblasbare Fortsatz (50) aus wenigstens einem separaten Gewebeteil besteht.

12. Gassack-Modul nach einem der vorhergehenden Ansprüche, **dadurch gekennzeichnet, daß** der aufblasbare Fortsatz (50) aus zwei an ihren Außenrändem miteinander verbundenen, übereinanderliegenden Gewebeteilen besteht, die nur abschnittsweise am Rand zur Bildung von Überströmöffnungen zur Kammer (32) des Gassacks (22) nicht miteinander verbunden sind.

13. Gassack-Modul nach einem der vorhergehenden Ansprüche, **dadurch gekennzeichnet, daß** die Ausbuchtung die Form einer Pilzkappe hat.

14. Gassack-Modul nach einem der vorhergehenden Ansprüche, **dadurch gekennzeichnet, daß** der Fortsatz im aufgeblasenen Zustand des Gassacks abschnittsweise den vorderen Wandungsabschnitt (24) überlappt.

15. Gassack-Modul nach einem der vorhergehenden Ansprüche, **dadurch gekennzeichnet, daß** der Fortsatz (50) über wenigstens eine Überströmöffnung mit der Kammer (32) des Gassacks (22) strömungsmäßig verbunden ist, wobei die Überströmöffnung einen solch geringen Querschnitt aufweist, daß im vollständig aufgeblasenen Zustand des Gassacks (22) im Fortsatz (50) ein geringerer Druck als in der Kammer (32) herrscht.

## Claims

1. A gas bag module, comprising
a gas bag (22) including a gas bag wall which has a front and a rear wall section (24, 26),
an indentation (30) extending from the front wall section (24) in the direction towards the rear wall section (26) in the inflated state, which is formed in that a part of the gas bag wall is prevented from an unimpeded movement towards outside of the module on unfolding of the gas bag,
**characterized in that**
the gas bag (22), in the region of the mouth (28) of the indentation (30), has a bubble-like, inflatable extension (50) which is in flow connection with the chamber (32) of the gas bag (22) and closes the indentation (30), and
that the indentation (30) extends obliquely from its lowest point to the front wall section (24).

2. The gas bag module according to Claim 1, **characterized in that** only one inflatable extension (50) is provided, which is constructed such that during inflation it pushes from one side radially inwards into the mouth (28).

3. The gas bag module according to Claim 1 or 2, **characterized in that** in the inflated state of the gas bag (22), the extension (50) rests against sections of the gas bag wall defining the indentation (30).

4. The gas bag module according to any of the preceding claims, **characterized in that** the extension (50) in the inflated state projects outwards with respect to the front wall section (24).

5. The gas bag module according to any of the preceding claims, **characterized in that**, as seen in cross-section of the inflated gas bag, the extension (50) has at least one overflow opening to the chamber (32) of the, gas bag (22), which extends almost along the entire depth of the indentation (30).

6. The gas bag module according to any of Claims 1 to 4, **characterized in that**, as seen in cross-section of the inflated gas bag, the extension has at least one overflow opening to the chamber (32) of the gas bag (22), which is located remote from the mouth (28) of the indentation (30), preferably approximately in the middle between the front and the rear wall section (24, 26) and within the indentation (30).

7. The gas bag module according to any of the preceding claims, **characterized in that** the gas bag (22), as related to the spread-out, non-inflated state, consists of at least four superimposed fabric pieces connected with each other, comprising an upper and a lower fabric piece to form the front and rear wall sections (24, 26), respectively, and two inner fabric pieces (34, 38) which delimit the indentation (30).

8. The gas bag module according to Claim 7, **characterized in that** at least a multitude of the fabric pieces (24, 26, 54, 58) have a central opening (74), the openings being arranged concentrically to each other, as related to the spread-out, non-inflated state of the gas bag.

9. The gas bag module according to Claim 7 or 8, **characterized in that** the inner fabric pieces (54, 58) have the same outer geometry.

10. The gas bag module according to any of Claims 7 to 9, **characterized in that** the inner fabric pieces (24, 28) have an asymmetrical, annular shape with a bulge to form the extension (50).

11. The gas bag module according to any of Claims 1 to 9, **characterized in that** the inflatable extension (50) consists of at least one separate fabric piece.

12. The gas bag module according to any of the preceding claims, **characterized in that** the inflatable extension (50) is made up of two superimposed fabric pieces which are connected with each other at their outer edges, except for sections at the edge where the fabric pieces are not connected with each other to form overflow openings to the chamber (32) of the gas bag (22).

13. The gas bag module according to any of the preceding claims, **characterized in that** the bulge has the shape of a mushroom cap.

14. The gas bag module according to any of the preceding claims, **characterized in that** in the inflated state of the gas bag, the extension overlaps the front wall section (24) in part.

15. The gas bag module according to any of the preceding claims, **characterized in that** the extension (50) is in flow connection with the chamber (32) of the gas bag (22) via at least one overflow opening, the overflow opening having a cross-section that is so small that, in the fully inflated state of the gas bag (22), the pressure prevailing in the extension (50) is lower than that prevailing in the chamber (32).

## Revendications

1. Module de coussin à gaz, comprenant
un coussin à gaz (22) avec une paroi de coussin à gaz qui présente des tronçons de paroi antérieur et postérieur (24, 26),
un enfoncement (30) s'étendant, à l'état de gonflage, depuis le tronçon de paroi antérieur (24) en direction du tronçon de paroi postérieur (26), lequel enfoncement est formé par le fait qu'une partie de la paroi de coussin à gaz est empêchée de faire un mouvement sans entrave vers l'extérieur du module lorsque le coussin à gaz se déploie,
**caractérisé en ce que**
le coussin à gaz (22) a, dans la région de l'embouchure (28) de l'enfoncement (30), un prolongement (50) en forme de bulle gonflable se trouvant en liaison d'écoulement avec la chambre (32) du coussin à gaz (22), lequel ferme l'enfoncement (30), et
**en ce que** l'enfoncement (30) s'étend en oblique depuis son emplacement le plus bas jusqu'au tronçon de paroi antérieur (24).

2. Module de coussin à gaz selon la revendication 1, **caractérisé en ce qu'**il n'est prévu qu'un prolongement (50) gonflable qui réalisé de telle sorte qu'il se déploie lors du gonflage depuis un côté radialement vers l'intérieur dans l'embouchure (28).

3. Module de coussin à gaz selon la revendication 1 ou 2, **caractérisé en ce qu'**à l'état de gonflage du coussin à gaz (22), le prolongement (50) s'applique sur des tronçons de la paroi de coussin à gaz qui définit l'enfoncement (30).

4. Module de coussin à gaz selon l'une des revendications précédentes, **caractérisé en ce qu'**à l'état de gonflage, le prolongement (50) fait saillie vers l'extérieur par rapport au tronçon de paroi antérieur (24).

5. Module de coussin à gaz selon l'une des revendications précédentes, **caractérisé en ce que** vu en coupe transversale du coussin à gaz gonflé, le prolongement (50) a au moins une ouverture de trop-plein vers la chambre (32) du coussin à gaz (22) qui s'étend presque sur toute la profondeur de l'enfoncement (30).

6. Module de coussin à gaz selon l'une des revendications 1 à 4, **caractérisé en ce que** vu en coupe transversale du coussin à gaz gonflé, le prolongement a au moins une ouverture de trop-plein vers la chambre (32) du coussin à gaz (22), qui est située à distance de l'embouchure (28) de l'enfoncement (30), de préférence approximativement au milieu entre les tronçons de paroi antérieur et postérieur (24, 26), et dans l'enfoncement (30).

7. Module de coussin à gaz selon l'une des revendications précédentes, **caractérisé en ce que**, en relation avec l'état de déploiement non gonflé, le coussin à gaz (22), est constitué par au moins quatre pièces de tissu posées les unes sur les autres et reliées les unes aux autres, avec une pièce de tissu supérieure et une pièce de tissu inférieure pour former respectivement les tronçons de paroi antérieur et postérieur (24, 26) et par deux parties de tissu intérieures (34, 38) qui délimitent l'enfoncement (30).

8. Module de coussin à gaz selon la revendication 7, **caractérisé en ce qu'**au moins une multitude des pièces de tissu (24, 26, 54, 58) ont une ouverture centrée (74), les ouvertures étant agencées concentriquement les unes par rapport aux autres, en relation avec l'état de déploiement non gonflé.

9. Module de coussin à gaz selon la revendication 7 ou 8, **caractérisé en ce que** les pièces de tissu intérieures (54, 58) ont la même géométrie extérieure.

10. Module de coussin à gaz selon l'une des revendications 7 à 9, **caractérisé en ce que** les pièces de tissu intérieures (24, 28) ont une forme annulaire asymétrique avec une indentation pour former le prolongement (50).

11. Module de coussin à gaz selon l'une des revendications 1 à 9, **caractérisé en ce que** le prolongement (50) gonflable est constitué par au moins une pièce de tissu séparée.

12. Module de coussin à gaz selon l'une des revendications précédentes, **caractérisé en ce que** le prolongement gonflable (50) est constitué par deux pièces de tissu posées l'une sur l'autre et reliée l'une à l'autre sur leurs bords extérieurs et qui, seulement par tronçons, ne sont pas reliées l'une à l'autre sur le bord pour former des ouvertures de trop-plein vers la chambre (32) du coussin à gaz (22).

13. Module de coussin à gaz selon l'une des revendications précédentes, **caractérisé en ce que** l'indentation a la forme d'un chapeau de champignon.

14. Module de coussin à gaz selon l'une des revendications précédentes, **caractérisé en ce qu'**à l'état de gonflage du coussin à gaz, le prolongement chevauche par portions le tronçon de paroi antérieur (24).

15. Module de coussin à gaz selon l'une des revendications précédentes, **caractérisé en ce que** le prolongement (50) est relié en écoulement via au moins une ouverture de trop-plein avec la chambre (32) du coussin à gaz (22), l'ouverture de trop-plein présentant une section transversale si faible qu'à l'état de gonflage intégral du coussin à gaz (22), il règne une pression plus faible dans le prolongement (50) que dans la chambre (32).
